# EUROPEAN PATENT APPLICATION

(11) **EP 4 559 851 A1**
(43) Date of publication of application: **28.05.2025**
(21) Application number: 24183430.8
(22) Date of filing: 20.06.2024
(51) Int. Cl.: B65H 29/24

(54) **ELECTRODE PLATE TRANSFER DEVICE AND METHOD**

(30) Priority: 24.11.2023 KR 20230165765
(71) Applicant: Samsung SDI Co., Ltd., Yongin-si, Gyeonggi-do 17084 (KR)
(72) Inventor: Cho, Seong Bong, 16678 Suwon-si, Gyeonggi-do (KR); Kang, Jeong Ho, 16678 Suwon-si, Gyeonggi-do (KR); Cho, Jae Kyung, 16678 Suwon-si, Gyeonggi-do (KR)
(74) Representative: Gulde & Partner

(57) **Abstract**

The present invention relates to an electrode plate transfer device (1, 2, 3) and method, and the electrode plate transfer device (1, 2, 3) includes a base part (10), a rotation providing part (20) which is mounted on the base part (10) and provides a rotational force, a linear driving part (30) linearly moved by the rotation providing part (20), and a transfer part (40) which is connected to the linear driving part (30), is supported by the base part (10), and moves an electrode plate (100).

## Description

### BACKGROUND

### 1. Field of the Invention

The present invention relates to an electrode plate transfer device and method.

### 2. Description of the Related Art

In general, with rapidly increasing demand for portable electronics, such as laptops, video cameras, and mobile phones, and commercialization of robots and electric vehicles, research is actively carried out to develop high-performance secondary batteries enabling repeated charging/discharging.

Secondary batteries are widely used in small devices, such as portable electronics, as well as medium and large devices, such as electric vehicles and energy storage systems (ESS), for power generation and energy storage. In particular, in medium or large devices, multiple battery cells may be electrically connected to each other to form a battery module in order to enhance output and/or capacity of the batteries.

In a lithium secondary battery, electrode plates include a positive electrode and a negative electrode. The positive electrode and the negative electrode may be formed through a process of coating thin films formed of aluminum and copper materials with a slurry manufactured by mixing an active material and a solvent and drying the coated slurry.

However, since a stacking method among secondary battery manufacturing methods may be disadvantageous in terms of production speed, an electrode plate transfer and stacking speed needs to be improved in order to improve the production speed in a stacking process.

The above information disclosed in this Background section is provided for enhancement of understanding of the background of the present disclosure, and, therefore, it may contain information that does not constitute related (or prior) art.

### SUMMARY

The present invention is directed to providing an electrode plate transfer device and method capable of increasing the production speed of a stacking process by increasing an electrode plate transfer speed.

These and other aspects and features of the present disclosure will be described in or will be apparent from the following description of some embodiments of the present disclosure.

According to an aspect of one or more embodiments of the present invention, there is provided an electrode plate transfer device including a base part, a rotation providing part which is mounted on the base part and provides a rotational force, a linear driving part linearly moved by the rotation providing part, and a transfer part which is connected to the linear driving part is supported by the base part, and moves an electrode plate.

The base part may include a base fixing part, a base adjustment part mounted on the base fixing part, and a base support part of which a height may be adjusted by the base adjustment part and which may support the transfer part.

The base fixing part may include a fixing case, a fixing installation stand which is formed on the fixing case and on which the base adjustment part may be mounted, and a fixing guide pipe which is formed in the fixing case and may guide the base adjustment part to vertically pass through the fixing guide pipe.

The base adjustment part may include an adjustment vertical rod passing through the fixing guide pipe, an adjustment horizontal rod connected to an upper portion of the adjustment vertical rod and that may be disposed above the fixing guide pipe, and an adjustment lifting part which is mounted on the fixing installation stand and may vertically move the adjustment horizontal rod.

The adjustment horizontal rod may be provided as a pair of adjustment horizontal rods disposed to face each other, and the adjustment vertical rod may be connected to each of the adjustment horizontal rods.

The base adjustment part may further include an adjustment stopper connected to a lower portion of the adjustment vertical rod and caught on the fixing guide pipe to restrict movement of the adjustment vertical rod.

The base adjustment part may further include an adjustment ring which is mounted on the lower portion of the adjustment vertical rod and cushions an impact due to a collision between the fixing guide pipe and the adjustment stopper.

The adjustment lifting part may include a lower lifting link rotatably mounted on the fixing installation stand, a lift motor which provides a rotational force to the lower lifting link, an upper lifting link rotatably connected to the lower lifting link, and a lifting support on which an upper portion of the upper lifting link is rotatably mounted and which is may be coupled to the adjustment horizontal rod.

The adjustment lifting part may be mounted on the fixing installation stand and connected to the adjustment horizontal rod and may have a variable length.

The base support part may include a support guide which guides the transfer part to slide while seated thereon and a support body which fixes a transfer belt provided in the transfer part and may guide movement of the transfer belt when the transfer part moves in a left-right direction.

The rotation providing part may include a rotary frame coupled to the base part, a rotary motor mounted on the rotary frame, and a rotary gear which is rotated by the rotary motor and that may pass through the transfer part.

The linear driving part may be coupled to the transfer part, engage with the rotary gear, and move in a left-right direction according to a rotation direction of the rotary gear.

The transfer part may include a transfer case supported by the base part to move in a left-right direction, a plurality of transfer pulleys rotatably mounted on the transfer case, a transfer belt which is wound around the transfer pulleys and that may move in an endless orbit and of which a portion may be fixed to the base part, and a transfer holder which is mounted on the transfer belt and that may move the electrode plate.

The transfer case may include a case rail slidably supported by the base part and a case body which is coupled to an upper portion of the case rail and on which the transfer pulleys may be rotatably mounted.

The case rail may be provided as a pair of case rails disposed to face each other, and the case body may be provided as a pair of case bodies which may be coupled to the case rails and face each other.

A side hole may be formed in a side surface of the case body so as not to interfere with the rotation providing part.

A portion of the base part may be inserted between lower portions of the case bodies and coupled to the transfer belt.

The transfer pulleys may include a pair of upper pulleys rotatably mounted on an upper portion of the transfer case to be spaced apart from each other and a pair of lower pulleys rotatably mounted on a lower portion of the transfer case to be spaced apart from each other.

The transfer holder may include a first holder coupled to the transfer belt and that may be interlocked with the transfer belt and a second holder which is connected to the first holder and that may hold the electrode plate.

According to another aspect of one or more embodiments of the present invention, there is provided an electrode plate transfer method including a detection operation in which a detector detects an electrode plate (e.g., detecting an electrode plate using a detector), a holding operation in which the transfer part holds the electrode plate when the detector detects the electrode plate (e.g., holding the electrode plate, using a transfer part, when the detector detects the electrode plate), and a power providing operation in which a rotation providing part is driven and provides power after the transfer part holds the electrode plate (e.g., driving a rotation providing part and providing power thereby after the transfer part holds the electrode plate), wherein, when the rotation providing part rotates, a linear driving part engaged with the rotation providing part moves in a left-right direction, and the transfer part moves, the transfer part includes a transfer case supported by a base part to move in the left-right direction, a plurality of transfer pulleys rotatably mounted on the transfer case, a transfer belt which is wound around the transfer pulleys, moves in an endless orbit and of which a portion is fixed to the base part, and a transfer holder which is mounted on the transfer belt and holds and moves the electrode plate, and the electrode plate is moved by the transfer case and the transfer belt.

In the electrode plate transfer device and method according to embodiments of the present invention, rotation movement provided by a rotation providing part is converted into linear movement by a linear driving part to move a transfer part holding an electrode plate.

In the electrode plate transfer device and method according to embodiments of the present invention, a transfer pulley is rotatably mounted on a transfer case, and a portion of a transfer belt wound around the transfer pulley is fixed to a base part. Accordingly, when the transfer case moves in conjunction with a linear driving part, a moving distance and acceleration of a transfer holder connected to the transfer belt increase compared to those in a rack and pinion method or timing belt method.

According to another aspect of one or more embodiments of the present invention, there is provided a battery pack manufactured using a battery including an electrode plate manufactured with an improved structure and a vehicle including the same.

However, the effects obtainable through the present disclosure are not limited to the above effects, and other technical effects that are not mentioned will be clearly understood by those skilled in the art from the following description of the present disclosure.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a schematic perspective view illustrating an electrode plate transfer device according to an embodiment of the present invention;
FIG. 2 is a schematic perspective view illustrating a base part according to an embodiment of the present invention;
FIG. 3 is a schematic plan view illustrating a base fixing part according to an embodiment of the present invention;
FIG. 4 is a schematic perspective view illustrating a base adjustment part according to an embodiment of the present invention;
FIG. 5 is a schematic plan view illustrating the base adjustment part according to an embodiment of the present invention;
FIG. 6 is a schematic perspective view illustrating an operational state of an adjustment ring according to an embodiment of the present invention;
FIG. 7 is a schematic perspective view illustrating an operational state of an adjustment lifting part according to a first embodiment of the present invention;
FIG. 8 is a schematic perspective view illustrating an operational state of an adjustment lifting part according to a second embodiment of the present invention;
FIG. 9 is a schematic plan view illustrating a base support part according to an embodiment of the present invention;
FIG. 10 is a schematic perspective view illustrating a rotation providing part according to an embodiment of the present invention;
FIG. 11 is a schematic perspective view illustrating an operational state of a linear driving part according to an embodiment of the present invention;
FIG. 12 is a schematic perspective view illustrating a transfer part according to an embodiment of the present invention;
FIG. 13 is a schematic perspective view illustrating a transfer case according to an embodiment of the present invention;
FIG. 14 is a schematic perspective view illustrating a side hole according to an embodiment of the present invention;
FIG. 15 is a schematic perspective view illustrating a transfer pulley according to an embodiment of the present invention;
FIG. 16 is a schematic perspective view illustrating a transfer holder according to an embodiment of the present invention;
FIG. 17 is a schematic perspective view illustrating an additional moving part according to an embodiment of the present invention;
FIG. 18 is a schematic perspective view illustrating an operational state of the electrode plate transfer device according to an embodiment of the present invention;
FIG. 19 is a comparison table of the electrode plate transfer device according to an embodiment of the present invention and other electrode plate transfer devices;
FIG. 20 is a schematic flowchart illustrating an electrode plate transfer method according to an embodiment of the present invention; and
FIG. 21 is a schematic perspective view illustrating an electrode plate transfer process according to FIG. 20.

### DETAILED DESCRIPTION OF EXEMPLARY EMBODIMENTS

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

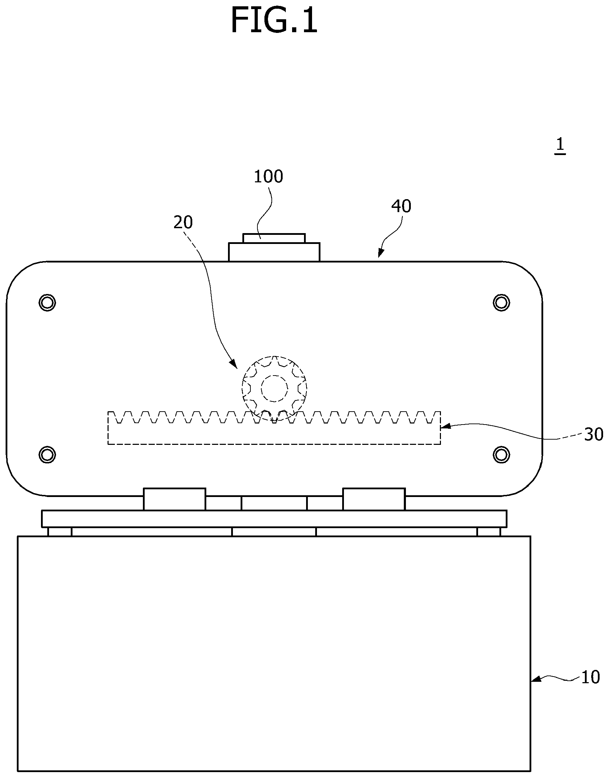

FIG. 1 is a schematic perspective view illustrating an electrode plate transfer device according to an embodiment of the present invention. Referring to FIG. 1, an electrode plate transfer device 1 according to an embodiment of the present invention includes a base part 10, a rotation providing part 20, a linear driving part 30, and a transfer part 40.

The base part 10 may be fixedly installed on a fixed object, such as the ground. The base part 10 may stably support the sliding movement of the transfer part 40. The base part 10 may adjust a height of the transfer part 40 as necessary.

The rotation providing part 20 may be mounted on the base part 10 and may provide a rotational force. The rotation providing part 20 may be fixedly installed on the base part 10 or a fixed object, such as the ground. The rotation providing part 20 may be inserted into the transfer part 40 and may provide a rotational force.

The linear driving part 30 may be linearly moved by the rotation providing part 20. The linear driving part 30 may have a rack gear shape and maintain a state of being engaged with the rotation providing part 20. The linear driving part 30 may convert rotational movement of the rotation providing part 20 into linear movement.

The transfer part 40 may be connected to the linear driving part 30, supported by the base part 10, and move an electrode plate 100. The transfer part 40 may maintain a state of being coupled to the linear driving part 30. When the linear driving part 30 reciprocates in a left-right direction, the transfer part 40 may repeatedly perform a process of transferring the electrode plate 100 in conjunction with the linear driving part 30. The transfer part 40 may transfer the electrode plate 100 while a belt or chain moves in an endless orbit.

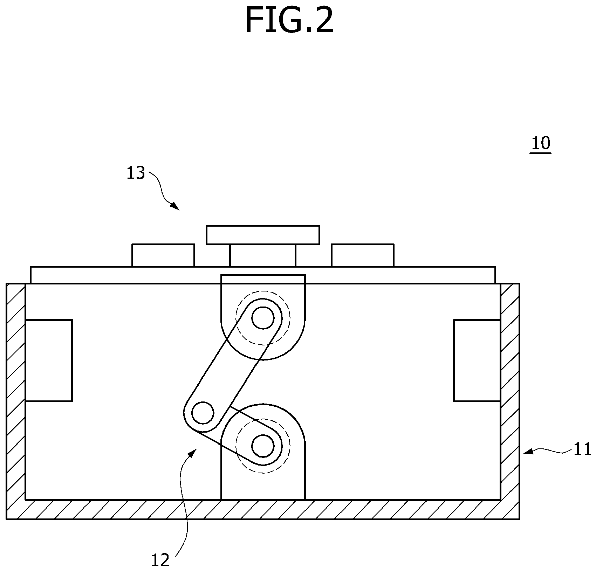

FIG. 2 is a schematic perspective view illustrating the base part according to an embodiment of the present invention. Referring to FIG. 2, the base part 10 according to an embodiment of the present invention may include a base fixing part 11, a base adjustment part 12, and a base support part 13.

The base fixing part 11 may maintain a state of being fixed to a fixed object, such as the ground. The base adjustment part 12 may be mounted on the base fixing part 11. A height of the base support part 13 may be adjusted by the base adjustment part 12. The base support part 13 may support the transfer part 40. The height of the base support part 13 may be adjusted by rotating a crank or varying a length of the base adjustment part 12. The transfer part 40 may be seated on the base support part 13, supported by the base support part 13, and slidably moved in the left-right direction.

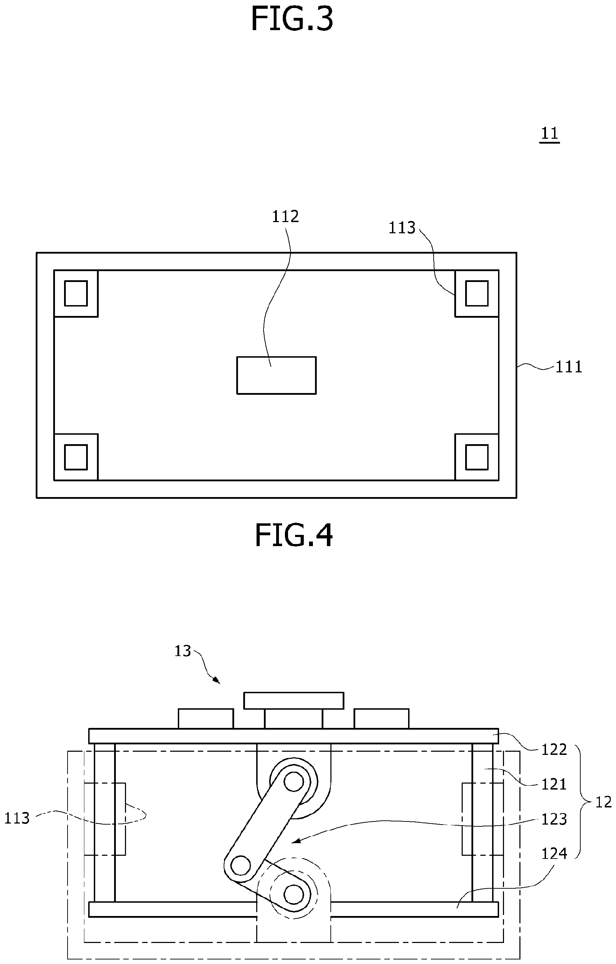

FIG. 3 is a schematic plan view illustrating the base fixing part according to an embodiment of the present invention. Referring to FIGS. 2 and 3, the base fixing part 11 according to an embodiment of the present invention may include a fixing case 111, a fixing installation stand 112, and a fixing guide pipe 113.

The fixing case 111 may be mounted on a fixed object, such as the ground. The fixing case 111 may have a box shape in which all or part of an upper surface is open. A cross section of the fixing case 111 may have a rectangular band shape.

The fixing installation stand 112 may be formed on the fixing case 111, and the base adjustment part 12 may be mounted on the fixing installation stand 112. The fixing installation stand 112 may be disposed on a central portion of a bottom surface of the fixing case 111. The fixing installation stand 112 may be disposed at a point at which a pair of diagonals, which extend from corners of the cross section of the fixing case 111, intersect each other.

The fixing guide pipe 113 may be formed in the fixing case 111 and may guide the base adjustment part 12 to vertically pass therethrough. The fixing guide pipe 113 may have a circular or angled pipe shape so that the base adjustment part 12 passes through the fixing guide pipe 113. Four fixing guide pipes 113 may be disposed in the four corner regions of the fixing case 111.

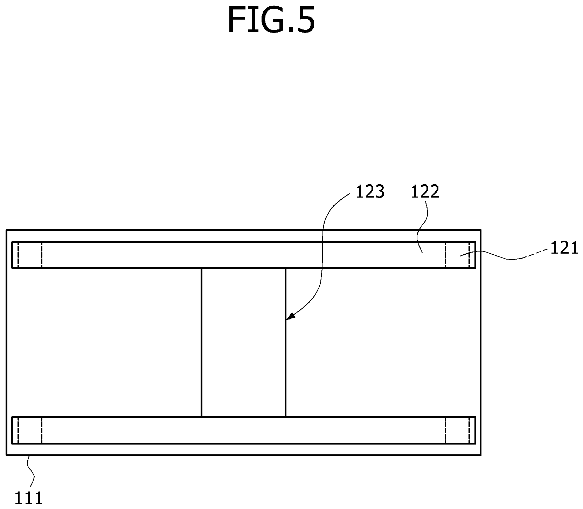

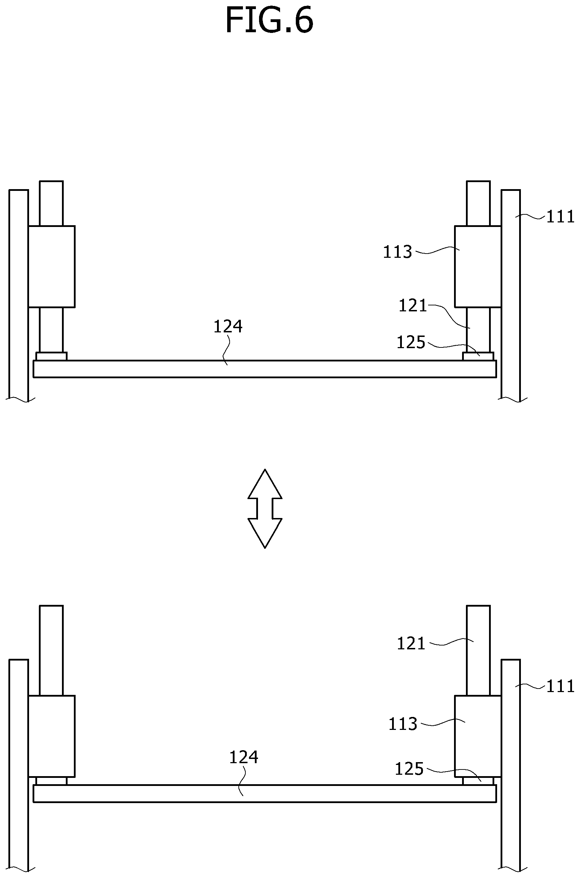

FIG. 4 is a schematic perspective view illustrating the base adjustment part according to an embodiment of the present invention, FIG. 5 is a schematic plan view illustrating the base adjustment part according to an embodiment of the present invention, and FIG. 6 is a schematic perspective view illustrating an operational state of an adjustment ring according to an embodiment of the present invention. Referring to FIGS. 4 to 6, the base adjustment part 12 according to an embodiment of the present invention may include an adjustment vertical rod 121, an adjustment horizontal rod 122, and an adjustment lifting part 123.

The adjustment vertical rod 121 may pass through the fixing guide pipe 113. The adjustment vertical rod 121 may have a length in a vertical direction and move in the vertical direction while passing through the fixing guide pipe 113.

The adjustment horizontal rod 122 may be connected to an end portion of the adjustment vertical rod 121 and disposed above the fixing guide pipe 113. The adjustment horizontal rod 122 may have a length in a direction in which the electrode plate 100 moves. The adjustment horizontal rod 122 may connect upper end portions of a pair of adjustment vertical rods 121. The base support part 13 may be provided on the adjustment horizontal rod 122.

The adjustment lifting part 123 may be mounted on the fixing installation stand 112 and may vertically move the adjustment horizontal rod 122. The adjustment lifting part 123 may be driven to adjust a height of the adjustment horizontal rod 122. In this case, the adjustment lifting part 123 may change the height of the adjustment horizontal rod 122 while a link is driven or a length of a cylinder is changed.

A pair of adjustment horizontal rods 122 may be disposed to face each other, and the adjustment vertical rod 121 may be connected to each of the adjustment horizontal rods 122. The adjustment vertical rod 121 may be coupled to a lower surface of each of both end portions of the adjustment horizontal rod 122.

The base adjustment part 12 according to an embodiment of the present invention may further include an adjustment stopper 124. The adjustment stopper 124 may be connected to a lower portion of the adjustment vertical rod 121 and caught (or abutting) on the fixing guide pipe 113 to restrict the movement of the adjustment vertical rod 121. The adjustment stopper 124 may be connected to the lower portion of the adjustment vertical rod 121 and disposed under the fixing guide pipe 113. The adjustment stopper 124 may have a length in a direction in which the electrode plate 100 moves. The adjustment stopper 124 may connect lower end portions of the pair of adjustment vertical rods 121 disposed to be spaced apart from each other in the direction in which the electrode plate 100 moves. The adjustment stopper 124 may have a shape that is symmetrical to the adjustment horizontal rod 122 based on the adjustment vertical rod 121.

The base adjustment part 12 according to an embodiment of the present invention may further include an adjustment ring 125. The adjustment ring 125 may be mounted on a lower portion of the adjustment vertical rod 121 and may cushion an impact due to a collision between the fixing guide pipe 113 and the adjustment stopper 124. The adjustment ring 125 may be manufactured of a cushioning material, such as rubber, and may be around (e.g., surround) the lower portion of the adjustment vertical rod 121. In addition, the adjustment ring 125 may be mounted on a lower portion of the fixing guide pipe 113 or on the adjustment stopper 124.

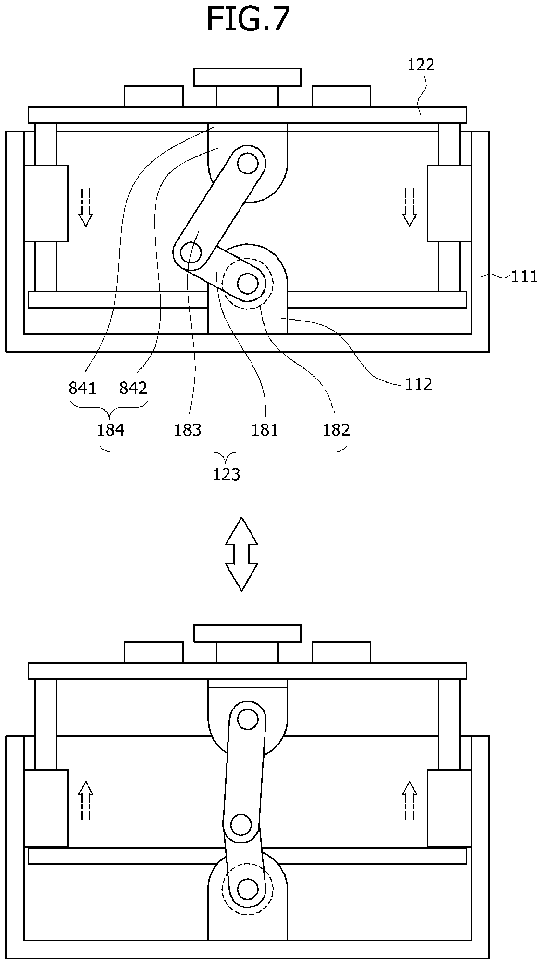

FIG. 7 is a schematic perspective view illustrating an operational state of an adjustment lifting part according to a first embodiment of the present invention. Referring to FIG. 7, an adjustment lifting part 123 according to the first embodiment of the present invention may include a lower lifting link 181, a lifting motor 182, an upper lifting link 183, and a lifting support 184.

The lower lifting link 181 may be rotatably mounted on a fixing installation stand 112. A lower end portion of the lower lifting link 181 may be rotatably hinge-coupled to the fixing installation stand 112. The fixing installation stand 112 may be provided with a bearing.

The lifting motor 182 may provide a rotational force to the lower lifting link 181. The lifting motor 182 may be mounted on the fixing case 111 or the fixing installation stand 112. The lifting motor 182 may be connected to a rotary shaft of the lower lifting link 181 and may rotate the lower lifting link 181.

The upper lifting link 183 may be rotatably connected to the lower lifting link 181. A lower end portion of the upper lifting link 183 may be rotatably connected to the lower lifting link 181.

An upper portion of the upper lifting link 183 may be rotatably mounted on the lifting support 184. The lifting support 184 may be coupled to the adjustment horizontal rod 122. The lifting support 184 may include a first lifting support 841 coupled to a pair of facing adjustment horizontal rods 122 each having a length in a direction perpendicular to a direction in which an electrode plate 100 moves and a second lifting support 842 which extends downward from a central portion of the first lifting support 841 and to which the upper lifting link 183 is rotatably coupled.

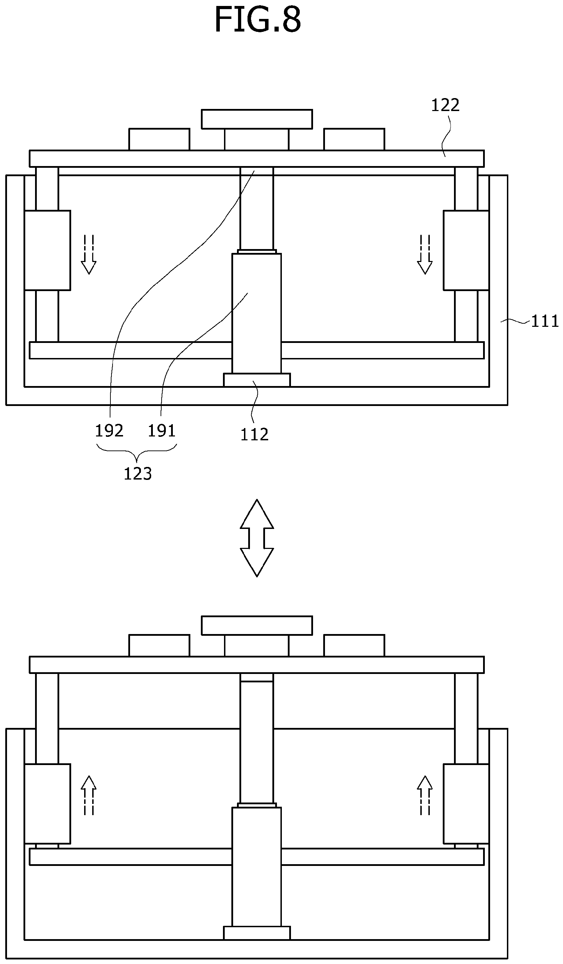

FIG. 8 is a schematic perspective view illustrating an operational state of an adjustment lifting part according to a second embodiment of the present invention. Referring to FIG. 8, an adjustment lifting part 123 according to the second embodiment of the present invention may be mounted on the fixing installation stand 112 and connected to the adjustment horizontal rod 122, and may have a variable length. More specifically, the adjustment lifting part 123 according to the second embodiment of the present invention may include a first adjustment lifting part 191 which is mounted on the fixing installation stand 112 and of which a length is variable due to hydraulic pressure and a second adjustment lifting part 192 having a length in a direction perpendicular to a direction in which the electrode plate 100 moves and coupled to a pair of facing adjustment horizontal rods 122. The first adjustment lifting part 191 may be connected to a lower portion of the second adjustment lifting part 192. The second adjustment lifting part 192 may be coupled to the pair of facing adjustment horizontal rods 122.

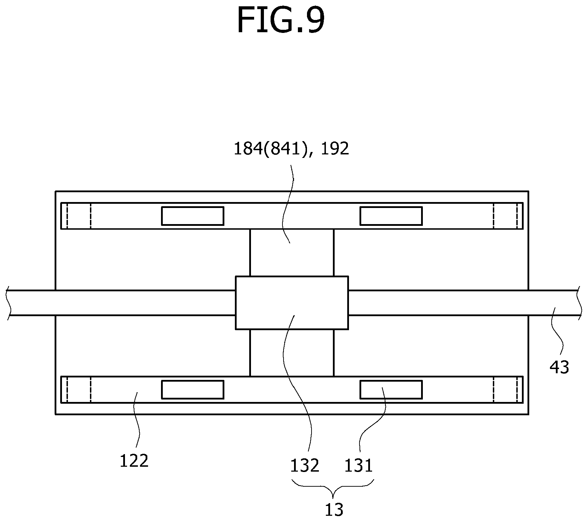

FIG. 9 is a schematic plan view illustrating the base support part according to an embodiment of the present invention. Referring to FIG. 9, the base support part 13 according to an embodiment of the present invention may include a support guide 131 and a support body 132.

The support guide 131 may guide the transfer part 40 to slide while seated thereon. The support guide 131 may be provided as a plurality of support guides 131 mounted in a longitudinal direction of the adjustment horizontal rod 122. The support guide 131 may be mounted on an upper end portion of the adjustment horizontal rod 122 and may guide the movement of the transfer part 40 in the left-right direction.

The support body 132 may fix a transfer belt 43 provided in the transfer part 40 and guide the movement of the transfer belt 43 when the transfer part 40 moves in the left-right direction. The support body 132 may be coupled to the lifting support 184 illustrated in FIG. 7 or the second adjustment lifting part 192 illustrated in FIG. 8 and may protrude upward. The support body 132 may be disposed at a lower central point of the transfer part 40 and may hold the transfer belt 43 or may be coupled to the transfer belt 43. Accordingly, when the transfer part 40 slides, the transfer belt 43 may move.

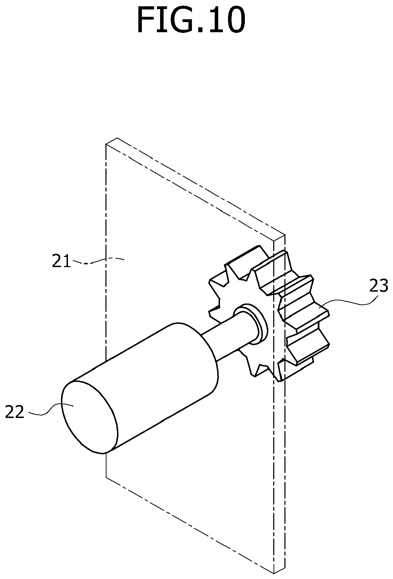

FIG. 10 is a schematic perspective view illustrating the rotation providing part according to an embodiment of the present invention. Referring to FIG. 10, the rotation providing part 20 according to an embodiment of the present invention may include a rotary frame 21, a rotary motor 22, and a rotary gear 23.

The rotary frame 21 may be coupled to the base part 10. The rotary frame 21 may be coupled to the fixing case 111 and extend upward. The rotary frame 21 may be fixedly installed on a fixed object, such as the ground, in addition to the base part 10.

The rotary motor 22 may be mounted on the rotary frame 21. When power is applied, the rotary motor 22 may be driven to provide a rotational force.

The rotary gear 23 may be rotated by the rotary motor 22 and may pass through the transfer part 40. The rotary gear 23 may be connected to a rotary shaft of the rotary motor 22, and an outer circumferential surface of the rotary gear 23 may have a gear shape.

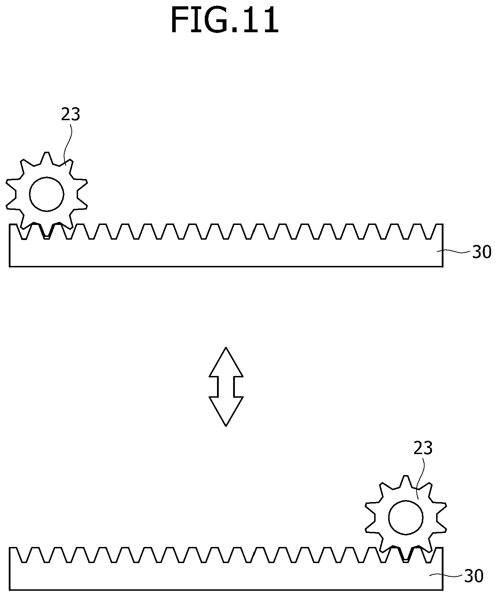

FIG. 11 is a schematic perspective view illustrating an operational state of the linear driving part according to an embodiment of the present invention. Referring to FIG. 11, the linear driving part 30 may be coupled to the transfer part 40 and engaged with the rotary gear 23. The linear driving part 30 may move in the left-right direction according to a rotation direction of the rotary gear 23. A gear may be formed on a side surface of the linear driving part 30. The linear driving part 30 and the rotary gear 23 may be connected in a rack and pinion manner. A moving amount or moving speed of the linear driving part 30 may vary according to a rotation amount or rotation speed of the rotary gear 23. Since the linear driving part 30 is connected to the transfer part 40, movement of the linear driving part 30 may result in movement of the transfer part 40.

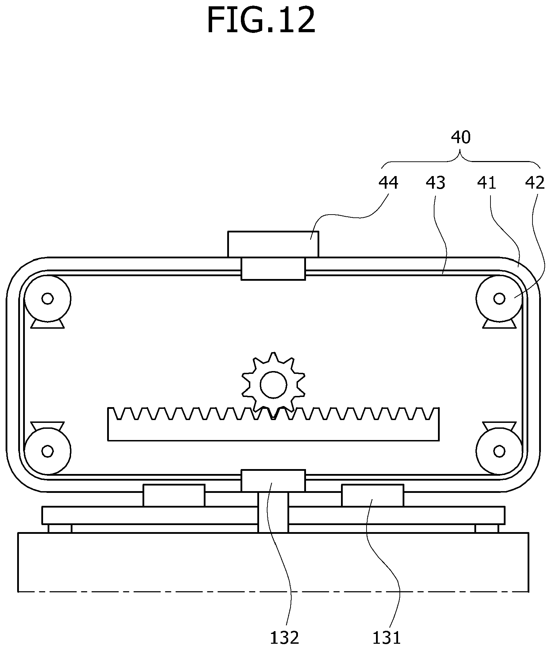

FIG. 12 is a schematic perspective view illustrating the transfer part according to an embodiment of the present invention. Referring to FIG. 12, the transfer part 40 according to an embodiment of the present invention may include a transfer case 41, a transfer pulley 42, a transfer belt 43, and a transfer holder 44.

The transfer case 41 may be supported by the base part 10 and moved in the left-right direction. The transfer case 41 may be provided as a pair of transfer cases 41 disposed to face each other. The transfer case 41 may be movably supported by the support guide 131.

The transfer pulley 42 may be provided as a plurality of transfer pulleys 42 rotatably mounted on the transfer case 41. In an embodiment, four transfer pulleys 42 may be disposed between the pair of transfer cases 41. For example, four transfer pulleys 42 may be disposed at corner points of the transfer cases 41 each having a quadrangular plate shape in which a lateral width is greater than a vertical width.

The transfer belt 43 may be wound around the transfer pulley 42 and move in an endless orbit. A part of the transfer belt 43 may be fixed to the base part 10. Both end portions of the transfer belt 43 may be fixed to the support body 132.

The transfer holder 44 may be mounted on the transfer belt 43 and may move the electrode plate 100. The transfer holder 44 may be coupled to the transfer belt 43 disposed at an upper portion of the transfer part 40. Movement of the transfer belt 43 may result in movement of the transfer holder 44.

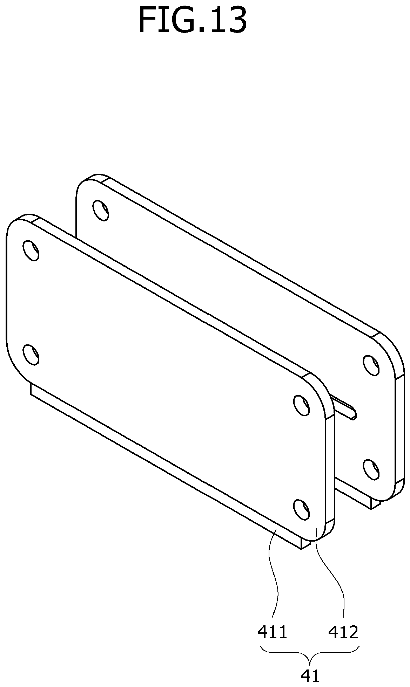

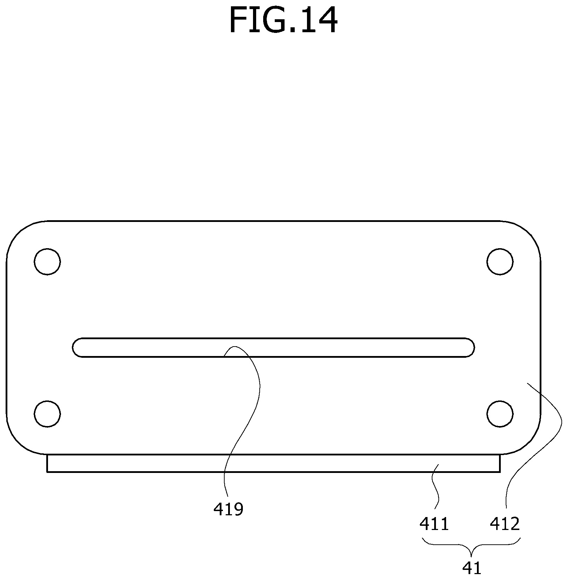

FIG. 13 is a schematic perspective view illustrating the transfer case according to an embodiment of the present invention, and FIG. 14 is a schematic perspective view illustrating a side hole according to an embodiment of the present invention. Referring to FIGS. 13 and 14, each of the pair of transfer cases 41 according to an embodiment of the present invention may include a case rail 411 and a case body 412.

The case rail 411 may be slidably supported by the base part 10. Both case rails 411 may have a rail shape and may be supported by support guides 131 disposed to be spaced apart from each other in the direction in which the electrode plate 100 moves.

The case body 412 may be coupled to an upper portion of the case rail 411, and the transfer pulley 42 may be rotatably mounted on the case body 412. A rotary shaft of the transfer pulley 42 may be rotatably mounted on the case body 412.

The pair of case rails 411 may be disposed to face each other, and the case bodies 412 may be coupled to the case rails 411 and may face each other. The transfer pulley 42 may be disposed between the case bodies 412, and the transfer belt 43 wound around the transfer pulley 42 may be disposed between the case bodies 412.

A side hole 419 may be formed in a side surface of the case body 412 so as not to interfere with the rotation providing part 20. The side hole 419 may be formed in any one of the pair of case bodies 412. A location of the rotation providing part 20 is fixedly maintained, and the rotation providing part 20 may engage with the linear driving part 30 disposed between the case bodies 412 through the side hole 419.

The case rail 411 and the case body 412 may be manufactured as separate components and vertically coupled. In addition, the case rail 411 and the case body 412 may be manufactured as one integrated component.

A portion of the base part 10 may be inserted between lower portions of the case bodies 412 and coupled to the transfer belt 43. The support body 132 of the FIG. 9 may be inserted between the case bodies 412 and may fix the transfer belt 43. The lower portion of the transfer belt 43 may be coupled to the support body 132. The linear driving part 30 may be disposed above the support body 132. The linear driving part 30 may be coupled to the case body 412. The linear driving part 30 may be disposed in the transfer belt 43.

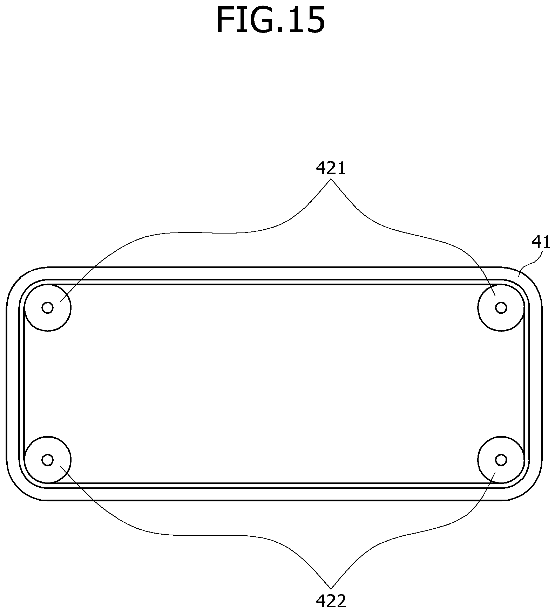

FIG. 15 is a schematic perspective view illustrating the transfer pulley according to an embodiment of the present invention. Referring to FIG. 15, the transfer pulley 42 according to an embodiment of the present invention may include an upper pulley 421 and a lower pulley 422.

A pair of upper pulleys 421 may be rotatably mounted on an upper portion of the transfer case 41 to be spaced apart from each other. The upper pulleys 421 may be disposed on left and right end corner regions of an upper portion of the case body 412.

A pair of lower pulleys 422 may be rotatably mounted on a lower portion of the transfer case 41 to be spaced apart from each other. The lower pulleys 422 may be disposed on left and right end corner regions of a lower portion of the case body 412.

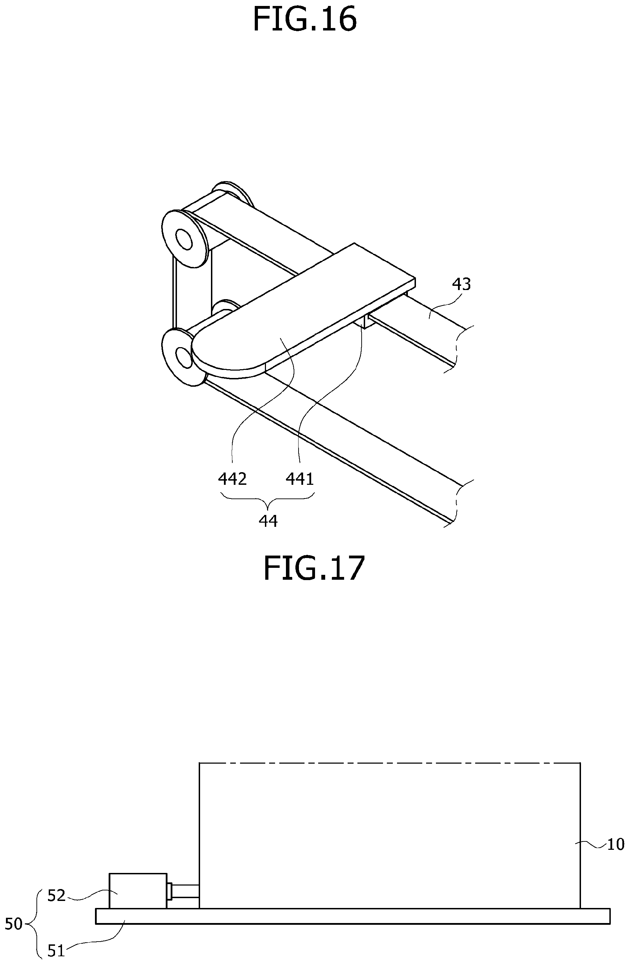

FIG. 16 is a schematic perspective view illustrating the transfer holder according to an embodiment of the present invention. Referring to FIG. 16, the transfer holder 44 according to an embodiment of the present invention may include a first holder 441 and a second holder 442.

The first holder 441 may be coupled to the transfer belt 43 and interlocked with the transfer belt 43. The first holder 441 may be coupled to an upper portion of the transfer belt 43. The first holder 441 may protrude in a direction perpendicular to the transfer belt 43.

The second holder 442 may be connected to the first holder 441 and may hold the electrode plate 100. In an embodiment, a suction plate may be formed on the second holder 442, and the second holder 442 may maintain a state of adsorbing the electrode plate 100 through pneumatic pressure. When the electrode plate 100 reaches its destination, the second holder 442 may be separated from the electrode plate 100. In addition, the second holder 442 may maintain the state of holding the electrode plate 100 in any of various ways.

FIG. 17 is a schematic perspective view illustrating an additional moving part according to an embodiment of the present invention. Referring to FIG. 17, the electrode plate transfer device 1 according to an embodiment of the present invention may further include an additional moving part 50.

The additional moving part 50 may move the base part 10 in the left-right direction to expand a moving region of the electrode plate 100. The additional moving part 50 may include an additional rail 51 which supports a lower portion of the base part 10 and guides the sliding movement of the base part 10 and an additional cylinder 52 which is connected to an end portion of the base part 10 and whose length varies in the direction in which the electrode plate 100 moves.

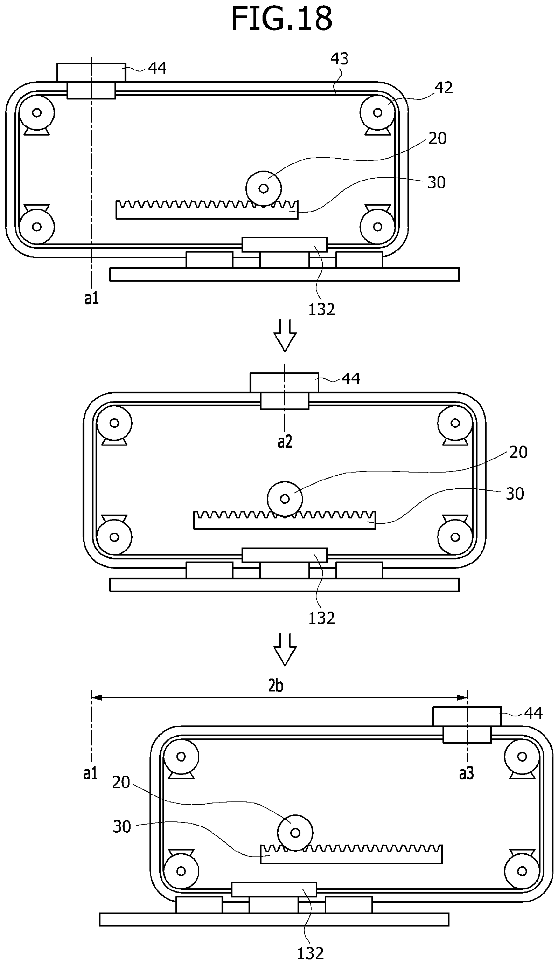

FIG. 18 is a schematic perspective view illustrating an operational state of the electrode plate transfer device according to an embodiment of the present invention. Operations of the electrode plate transfer device 1 will be described with reference to FIG. 18 as follows. In this case, in the drawing, the support body 132 and the rotation providing part 20 are disposed vertically collinear with each other, and a left side and a right side are divided based thereon and will be described.

In a first operation, the linear driving part 30 is moved to the left by the rotation providing part 20 and stands by. When the linear driving part 30 moves, the transfer case 41 connected to the linear driving part 30 moves to a left end. In this case, the transfer holder 44 connected to the transfer belt 43 fixed to the support body 132 is moved to the left end and disposed at a point a1. In the first operation, the transfer holder 44 holds the electrode plate 100.

In a second operation, in a state in which the transfer holder 44 holds the electrode plate 100, the rotation providing part 20 is driven, and the linear driving part 30 moves to the right. When the linear driving part 30 moves, the transfer case 41 connected to the linear driving part 30 moves to the right. In this case, the transfer holder 44 connected to the transfer belt 43 fixed to the support body 132 moves to the right and passes a point a2,
In a third operation, when the rotation providing part 20 is driven continuously, the linear driving part 30 continues to move to the right, reaches a limit point, and stands by. When the linear driving part 30 moves, the transfer case 41 connected to the linear driving part 30 is moved to the right. In this case, the transfer holder 44 connected to the transfer belt 43 fixed to the support body 132 is moved to a right end and disposed at a point a3. In the third operation, the transfer holder 44 may supply the electrode plate 100 to its destination.

In the above-described operations, a transfer distance of the electrode plate 100 may be the sum of a moving distance of the linear driving part 30 and a moving distance of the transfer belt 43. That is, it is assumed that a circumferential length b of the rotary gear 23 and a circumferential length b of the transfer pulley 42 are the same, and when the rotary gear 23 rotates 360°, the linear driving part 30 moves a distance b. When the linear driving part 30 moves the distance b, the transfer belt 43 wound around the transfer pulley 42 also moves the distance b. Accordingly, the electrode plate 100 held by the transfer holder 44 mounted on the transfer belt 43 moves a distance 2b which is the sum of the moving distance of the transfer case 41 and the moving distance of the transfer belt 43.

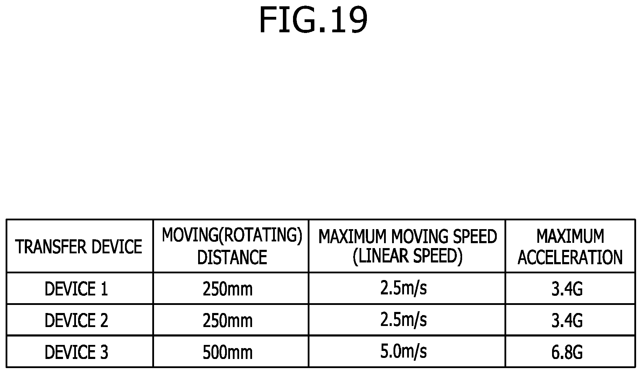

FIG. 19 is a comparison table of the electrode plate transfer device according to an embodiment of the present invention and other electrode plate transfer devices. Referring to FIG. 19, values of target object moving distances and speeds of the electrode plate transfer device (device 3) according to an embodiment of the present invention, a transfer device (device 1) using a rack gear, and a transfer device (device 2) using a belt are measured. In this case, the electrode plate transfer device 1 according to an embodiment of the present invention may be a transfer device in which a rack gear and a belt are combined. As shown in FIG. 19, when the rotary gear 23 rotates 360°, an object moving distance of each of the devices 1 and 2 is 250 mm, and an object moving distance of the device 3 is 500 mm. In addition, a maximum moving speed and a maximum acceleration of the device 3 are also twice those of each of the devices 1 and 2.

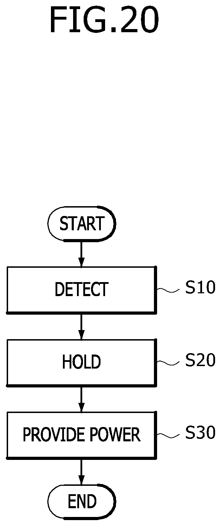

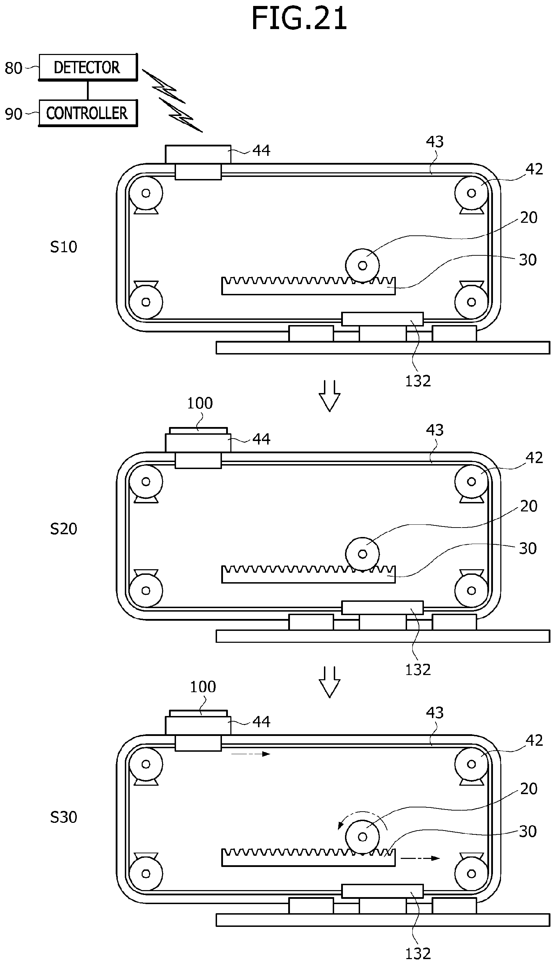

FIG. 20 is a schematic flowchart illustrating an electrode plate transfer method according to an embodiment of the present invention, and FIG. 21 is a schematic perspective view illustrating an electrode plate transfer process according to FIG. 20. Referring to FIGS. 20 and 21, the electrode plate transfer method according to an embodiment of the present invention will be described below.

In a detection operation S10, a detector 80 detects the electrode plate 100. The detector 80 may be disposed above the transfer part 40 and may detect a supply location of the electrode plate 100. In addition, the detector 80 may be provided on the transfer holder 44.

In a holding operation S20, the transfer part 40 holds the electrode plate 100. That is, when the detector 80 detects the electrode plate 100 and transmits a location signal for the electrode plate 100 to a controller 90, the controller 90 controls the transfer holder 44 of the transfer part 40 so that the transfer holder 44 may hold the electrode plate 100.

In a power providing operation S30, the rotation providing part 20 is driven and provides power. That is, when the transfer holder 44 holds the electrode plate 100, the controller 90 applies power to the rotation providing part 20.

When power is applied to the rotation providing part 20, the linear driving part 30 moves in the left-right direction, and the electrode plate 100 may be moved more rapidly by the movement of the transfer belt 43 in addition to the movement of the transfer case 41. In this case, when power is provided by the rotation providing part 20, since the transfer part 40 moves as shown in FIG. 18, the detailed description thereof will be omitted.

Although the present invention has been described with reference to some embodiments and drawings illustrating aspects thereof, the present invention is not limited thereto. Various modifications and variations can be made by a person skilled in the art to which the present invention belongs within the scope of the present invention as defined by the appended claims and equivalents thereto.

## Claims

1. An electrode plate transfer device (1, 2, 3) comprising:
a base part (10);
a rotation providing part (20) which is mounted on the base part (10) and configured to provide a rotational force;
a linear driving part (30) configured to be linearly moved by the rotation providing part (20); and
a transfer part (40) which is connected to the linear driving part (30), is supported by the base part (10), and configured to move an electrode plate (100).

2. The electrode plate transfer device (1, 2, 3) of claim 1, wherein the base part (10) includes:
a base fixing part (11);
a base adjustment part (12) mounted on the base fixing part (11); and
a base support part (13) of which a height is adjustable by the base adjustment part (12) and which supports the transfer part (40).

3. The electrode plate transfer device (1, 2, 3) of claim 2, wherein the base fixing part (11) includes:
a fixing case (111);
a fixing installation stand (112) which is formed on the fixing case (111) and on which the base adjustment part (12) is mounted; and
a fixing guide pipe (113) which is formed in the fixing case (111) and configured to guide the base adjustment part (12) to vertically pass through the fixing guide pipe (113).

4. The electrode plate transfer device (1, 2, 3) of claim 3, wherein the base adjustment part (12) includes:
an adjustment vertical rod (121) passing through the fixing guide pipe (113);
an adjustment horizontal rod (122) connected to an upper portion of the adjustment vertical rod (121) and disposed above the fixing guide pipe (113); and
an adjustment lifting part (123) which is mounted on the fixing installation stand (112) and configured to vertically move the adjustment horizontal rod (122).

5. The electrode plate transfer device (1, 2, 3) of claim 4, wherein:
the adjustment horizontal rod (122) is provided as a pair of adjustment horizontal rods (122) disposed to face each other; and
the adjustment vertical rod (121) is connected to each of the adjustment horizontal rods (122).

6. The electrode plate transfer device (1, 2, 3) of claim 4 or 5, wherein the base adjustment part (12) further includes an adjustment stopper (124) connected to a lower portion of the adjustment vertical rod (121) and configured to be caught on the fixing guide pipe (113) to restrict movement of the adjustment vertical rod (121).

7. The electrode plate transfer device (1, 2, 3) of any one of claims 4 to 6, wherein the adjustment lifting part (123) includes:
a lower lifting link (181) rotatably mounted on the fixing installation stand (112);
a lifting motor (182) which is configured to provide a rotational force to the lower lifting link (181);
an upper lifting link (183) rotatably connected to the lower lifting link (181); and
a lifting support (184) on which an upper portion of the upper lifting link (183) is rotatably mounted and which is coupled to the adjustment horizontal rod (122).

8. The electrode plate transfer device (1, 2, 3) of any one of claims 4 to 7, wherein the adjustment lifting part (123) is mounted on the fixing installation stand (112) and connected to the adjustment horizontal rod (122) and has a variable length.

9. The electrode plate transfer device (1, 2, 3) of claims 2 to 8, wherein the base support part (13) includes:
a support guide (131) which guides the transfer part (40) to slide while seated thereon; and
a support body (132) which fixes a transfer belt (43) provided in the transfer part (40) and guides movement of the transfer belt (43) when the transfer part (40) moves in a left-right direction.

10. The electrode plate transfer device (1, 2, 3) of any one of the preceding claims, wherein the rotation providing part (20) includes:
a rotary frame (21) coupled to the base part (10);
a rotary motor (22) mounted on the rotary frame (21); and
a rotary gear (23) which is configured to be rotated by the rotary motor (22) and passes through the transfer part (40).

11. The electrode plate transfer device (1, 2, 3) of any one of the preceding claims, wherein the transfer part (40) includes:
a transfer case (41) supported by the base part (10) to move in a left-right direction;
a plurality of transfer pulleys (42) rotatably mounted on the transfer case (41);
a transfer belt (43) which is wound around the transfer pulleys (42) and configured to move in an endless orbit and of which a portion is fixed to the base part (10); and
a transfer holder (44) which is mounted on the transfer belt (43) and configured to move the electrode plate (100).

12. The electrode plate transfer device (1, 2, 3) of claim 11, wherein the transfer case (41) includes:
a case rail (411) slidably supported by the base part (10); and
a case body (412) which is coupled to an upper portion of the case rail (411) and on which the transfer pulleys (42) are rotatably mounted.

13. The electrode plate transfer device (1, 2, 3) of claim 11 or 12, wherein the transfer pulleys (42) include:
a pair of upper pulleys (421) rotatably mounted on an upper portion of the transfer case (41) to be spaced apart from each other; and
a pair of lower pulleys (422) rotatably mounted on a lower portion of the transfer case (41) to be spaced apart from each other.

14. The electrode plate transfer device (1, 2, 3) of any one of claims 11 to 13, wherein the transfer holder (44) includes:
a first holder (441) coupled to the transfer belt (43) and interlocked with the transfer belt (43); and
a second holder (442) which is connected to the first holder (441) and configured to hold the electrode plate (100).

15. An electrode plate transfer method comprising:
a detection operation in which a detector (80) detects an electrode plate (100);
a holding operation in which a transfer part (40) holds the electrode plate (100) when the detector (80) detects the electrode plate (100); and
a power providing operation in which a rotation providing part (20) is driven and provides power after the transfer part (40) holds the electrode plate (100),
wherein, when the rotation providing part (20) rotates (360), a linear driving part (30) engaged with the rotation providing part (20) moves in a left-right direction, and the transfer part (40) moves,
the transfer part (40) includes a transfer case (41) supported by a base part (10) to move in the left-right direction, a plurality of transfer pulleys (42) rotatably mounted on the transfer case (41), a transfer belt (43) which is wound around the transfer pulleys (42), moves in an endless orbit and of which a portion is fixed to the base part (10), and a transfer holder (44) which is mounted on the transfer belt (43) and holds and moves the electrode plate (100), and
the electrode plate (100) is moved by the transfer case (41) and the transfer belt (43).
